# EUROPÄISCHE PATENTANMELDUNG

(11) **EP 0 793 030 A2**
(43) Veröffentlichungstag der Anmeldung: **03.09.1997**
(21) Anmeldenummer: 96120528.3
(22) Anmeldetag: 19.12.1996
(51) Int. Cl.: F16C 3/02, B23K 20/12

(54) **Antriebswelle**

(30) Priorität: 01.03.1996 DE 19607921
(71) Anmelder: Bayerische Motoren Werke Aktiengesellschaft, 80788 München (DE)
(72) Erfinder: Bönisch, Heinz-Jürgen, 82194 Gröbenzell (DE); Löffler, Albert, 83624 Offerfing (DE); Schleicher, Bernd, 81673 München (DE); Pöllmann, Werner, 86343 Königsbrunn (DE)

(57) **Zusammenfassung**

Es wird eine Antriebswelle, insbesondere für ein Kraftfahrzeug beschrieben, deren Antriebswellenteile durch Reibschweißung miteinander verbunden sind. Dabei ist die Wandstärke des Rohrquerschnitts eines Antriebswellenteils an der Reibschweißstelle größer als die Wandstärke des Rohrquerschnitts des anderen Antriebswellenteils. Das ergibt einen großen Bindungsanteil.

## Beschreibung

Die Erfindung betrifft eine Antriebswelle nach dem Oberbegriff des Hauptanspruchs.

Eine solche Antriebswelle ist bereits aus DE 31 04 068 A1 bekannt. Hier wird beschrieben, daß ein Gelenkteil und ein Wellenabschnitt einer Gelenkwelle beispielsweise durch Reibschweißung miteinander verbunden werden können. Auf die Reibschweißung wird im weiteren nicht eingegangen, da sich die Aufgabe der Patentanmeldung um das saubere Auswuchten einer Gelenkwelle dreht.

Demgegenüber ist es Aufgabe dieser Erfindung, eine Antriebswelle mit reibgeschweißter Verbindung zwischen Antriebswellenteilen bereitzustellen, bei der Antriebswellenteile insbesondere aus Leichtmetall bestehen und die Reibschweißverbindung eine hohe statische und dynamische Festigkeit für die Drehmomentübertragung aufweist.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung haben die Rohrquerschnitte zweier Antriebswellenteile an der Reibschweißstelle unterschiedliche Wandstärken. Das hat den Vorteil, daß der Bindungsanteil beim Reibschweißen sehr groß wird, insbesondere wenn der Rohr-querschnitt mit der kleineren Wandstärke das Rohr der Antriebswelle ist und aus Leichtmetall besteht. Der Rohrquerschnitt mit der größeren Wandstärke gehört dann insbesondere zu einem Anbauteil, zum Beispiel zu einem Gelenkteil oder zu einem Lagerzapfenteil aus Stahl oder Leichtmetall. Dabei ist die Antriebswelle so aufgebaut, daß die Antriebswellenteile koaxial hintereinander liegen und der Außendurchmesser der Anbauteile größer oder gleich ist dem Außendurchmesser des Rohrs, wobei gleichzeitig der Innendurchmesser des Rohrquerschnitts der Anbauteile an der Reibschweißstelle kleiner ist als der Innendurchmesser des Rohrs an der Reibschweißstelle. Sind die Innendurchmesser von Rohr und Anbauteilen gleich, so muß der Außendurchmesser des Rohrs kleiner sein als der der Anbauteile.

Ein hoher Bindungsanteil an der Reibschweißstelle von Rohr und Anbauteilen bewirkt, daß die Antriebswelle eine hohe statische und dynamische Festigkeit für Drehmomentübertragung besitzt. Insbesondere wird durch sogenanntes Nachstauchen der Reibschweißverbindung im Wärmeeinflußbereich eine Festigkeitssteigerung erreicht.

Ein bevorzugtes Ausführungsbeispiel der Erfindung ist in der nachfolgenden Beschreibung und der zugehörigen Zeichnung näher dargestellt. Es zeigen:
- Figur 1: eine Ansicht einer Antriebswelle entsprechend der Erfindung in zwei Varianten und
- Figur 2: eine vergrößerte Schnittdarstellung eines Ausschnitts an der Reibschweißstelle für eine Reibschweißverbindung eines Leichtmetallrohres mit einem Anbauteil aus Stahl.

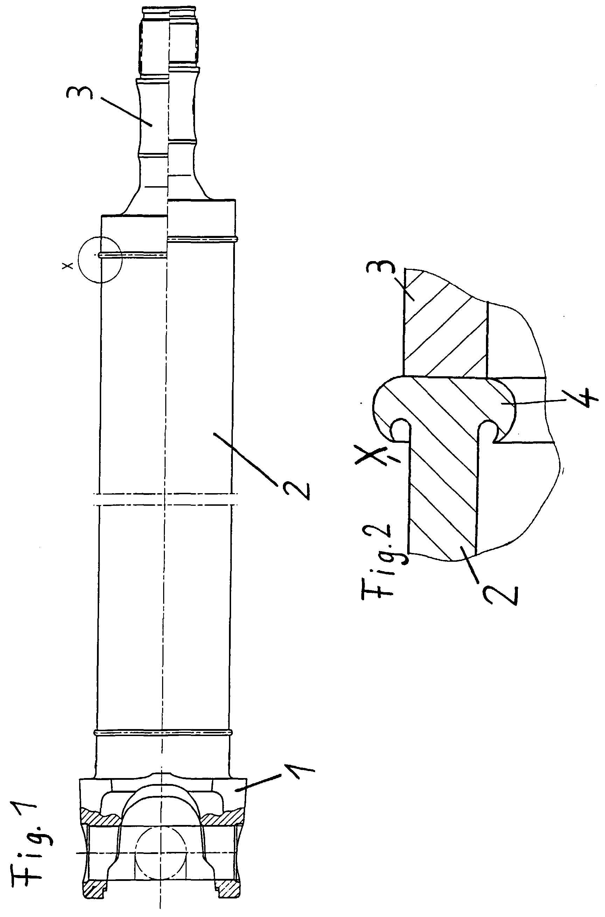

In Figur 1 ist eine Antriebswelle dargestellt, bestehend aus einem Gelenkteil 1, einem Rohr 2 und einem Lagerzapfenteil 3. Das Rohr 2 besteht aus einem Leichtmetallwerkstoff und ist durch Reibschweißung am einen Ende mit dem Gelenkteil 1 und am anderen Ende mit dem Lagerzapfenteil 3 verbunden. Dabei kann das Gelenkteil 1 oder das Lagerzapfenteil 3 aus einem Leichtmetallwerkstoff oder aus Stahl hergestellt sein.

Figur 2 zeigt in einem Ausschnitt einen Querschnitt der Reibschweißverbindung für die Antriebswelle. Der Ausschnitt ist in Figur 1 mit X gekennzeichnet. Ein Ende des Rohrs 2 mit kleinerer Wandstärke ist durch Reibschweißung mit einem Ende des Lagerzapfenteils 3 mit größerer Wandstärke als Anbauteil verbunden. Zwischen Rohr 2 und Lagerzapfenteil 3 ist mit der Bezugsziffer 4 symbolisch der aufgeriebene Bereich der Reibschweißnaht dargestellt. Durch die vergrößerte Darstellung in Figur 2 ist deutlicher als in Figur 1 erkennbar, daß der Außendurchmesser des Rohrs 2 kleiner ist als der Außendurchmesser des Lagerzapfenteils 3, zumindest im Bereich des Rohrquerschnitts an der Reibschweißstelle. Dabei ist der Innendurchmesser des Rohrs 2 größer als der Innendurchmesser des Lagerzapfenteils 3. Da Rohr 2 und Lagerzapfenteil 3 koaxial zueinander liegen (Figur 1), wird die Stirnfläche des Rohrquerschnitts von Rohr 2 vollständig von der Stirnfläche des Rohrquerschnitts des Lagerzapfenteils 3 überdeckt.

## Patentansprüche

1. Antriebswelle, insbesondere für ein Kraftfahrzeug, aus mindestens zwei Antriebswellenteilen mit mindestens je einem stirnseitigen Ende mit Rohrquerschnitt, wobei die Antriebswellenteile über ihr Ende mit Rohrquerschnitt durch Reibschweißung miteinander verbunden sind,
dadurch gekennzeichnet, daß die Wandstärke des Rohrquerschnitts eines Antriebswellenteils größer ist als die Wandstärke des Rohrquerschnitts des anderen Antriebswellenteils.

2. Antriebswelle nach Anspruch 1,
dadurch gekennzeichnet, daß der Rohrquerschnitt des Antriebswellenteils mit der kleineren Wandstärke an der Reibschweißstelle so dimensoniert ist, daß er den Rohrquerschnitt des Antriebswellenteils mit der größeren Wandstärke bei koaxialer Verbindung der beiden Antriebswellenteile mit seiner gesamten Stirnfläche berührt.

3. Antriebswelle nach Anspruch 1 oder 2,
dadurch gekennzeichnet, daß eines der Antriebswellenteile ein Rohr (2) ist, das insbesondere aus Leichtmetall besteht.

4. Antriebswelle nach einem der Ansprüche 1 bis 3,
dadurch gekennzeichnet, daß eines der Antriebswellenteile ein Gelenkteil (1) ist, das insbesondere aus Stahl oder Leichtmetall besteht.

5. Antriebswelle nach einem der Ansprüche 1 bis 4,
dadurch gekennzeichnet, daß eines der Antriebswellenteile ein Lagerzapfenteil (3) ist, das insbesondere aus Stahl oder Leichtmetall besteht.
